# EUROPÄISCHE PATENTSCHRIFT

(11) **EP 3 021 236 B1**
(45) Veröffentlichungstag und Bekanntmachung des Hinweises auf die Patenterteilung: **25.04.2018**
(21) Anmeldenummer: 15194133.3
(22) Anmeldetag: 11.11.2015
(51) Int. Cl.: G06F 17/30

(54) **TELEKOMMUNIKATIONSVERFAHREN ZUR ERZEUGUNG UND ÜBERMITTLUNG VON ERGEBNISDOKUMENTEN AUS TABELLARISCH GESPEICHERTEN DATEN**
TELECOMMUNICATION METHOD FOR CREATION AND TRANSMISSION OF RESULT DOCUMENTS FROM DATA STORED IN A TABLE
PROCEDE DE TELECOMMUNICATION DESTINE A LA GENERATION ET A LA TRANSMISSION DE DOCUMENTS FINAUX PROVENANT DE DONNEES MEMORISEES DANS UN TABLEAU

(30) Priorität: 11.11.2014 DE 102014016591
(43) Veröffentlichungstag der Anmeldung: 18.05.2016
(73) Patentinhaber: SYMAX Business Software AG, 65189 Wiesbaden (DE)
(72) Erfinder: Geisel, Thomas, 65719 Hofheim (DE)
(74) Vertreter: Patentanwälte Olbricht Buchhold Keulertz

(56) Entgegenhaltungen:
- US-A- 5 664 182
- US-B1- 7 051 038

## Beschreibung

Die vorliegende Erfindung befasst sich mit einem Telekommunikationsverfahren zur Erzeugung und Übermittlung von Ergebnisdokumenten über ein Telekommunikationsnetzwerk mit in relationalen Tabellen in einer Datenbank abgespeicherten Daten, wobei ein Client-Computersystem über das Telekommunikationsnetzwerk mit der in einem zweiten Computersystem enthaltenen Datenbank kommuniziert.

Der übliche Weg zur Erzeugung und Übermittlung von Dokumenten für ein Client-Computersystem besteht darin, dass dieses eine Abfrage in SQL-Syntax formuliert und über ein Telekommunikationsnetzwerk an ein eine Datenbank enthaltendes Computersystem sendet. Ein SQL-Parser und Optimizer in der Datenbank identifiziert die beteiligten Tabellen und legt den optimalen Zugriff fest. Die auf die Abfrage zutreffenden Datensätze und die selektierten Spalten werden in einem sogenannten Resultset vorgehalten. Anschließend wird das Client-Computersystem über die Bereitstellung des Resultsets informiert und bezieht die Daten aus der Datenbank.

Das Problem dieser herkömmlichen Abfrage von Daten, die in relationalen Tabellen abgespeichert sind, besteht darin, dass zur Erzeugung von komplexen Datenprofilen eine Vielzahl von SQL-Abfragen notwendig ist, wobei die bezogenen Resultsets durch das Client-Computersystem dann auch noch zu einem konsolidierten Ergebnisdokument weiterverarbeitet werden müssen. Insgesamt ergibt sich dadurch eine starke Frequentierung des Telekommunikationsnetzwerkes mit einer Vielzahl von Einzelabfragen. Zudem wird Rechnerleistung im Client-Computersystem benötigt, um letztendlich das gewünschte Ergebnisdokument zu generieren, das für eine Anwendung genutzt werden kann, z. B. Ein Textdokument, eine Tabelle oder ein Grafikdokument.

Zur Entlastung eines Client-Computersystems ist es auch bereits bekannt, zwischen das Client-Computersystem und das die Datenbank enthaltende zweite Computersystem ein Reporting-oder BI-System zwischenzuschalten, an welches das Client-Computersystem eine ReportAnfrage richtet. Das Reporting oder BI-System formuliert dann nacheinander alle notwendigen SQL-Abfragen und sendet diese an die Datenbank. Die Resultsets werden durch das Reporting- oder BI-System gepuffert und nach dem Vorliegen aller Daten erzeugt ein Renderer des Reporting- oder BI-Systems aus den gepufferten Daten das gewünschte Ergebnisdokument, welches dann an das Client-Computersystem weitergereicht werden kann.

Letztlich sorgt diese Lösung nur für eine Entlastung des Client-Computersystems, insgesamt wird die Belastung des Telekommunikationsnetzwerks durch diesen Verfahrensablauf meistens sogar noch erhöht, da zwischen dem Reporting- oder BI-System mindestens die gleiche Anzahl von SQL-Abfragen und Übermittelung von Resultsets ablaufen muss, wie bei der eingangs beschriebenen unmittelbaren Kommunikation zwischen dem Client-Computersystem und der Datenbank. Sofern das Client-Computersystem und das Reporting- oder BI-System ebenfalls über das Telekommunikationsnetzwerk kommunizieren, erhöht sich insgesamt die Netzwerkbelastung. Jedenfalls ist in der Regel für das Reporting- oder BI-System eine eigene Hardware-Infrastruktur erforderlich, so dass die Hardwarearchitektur in diesem Fall insgesamt langsamer und anfälliger sowie wartungs- und kostenintensiver ist.

Schließlich ist es auch bereits bekannt, Daten objektorientiert zu speichern, um durch die SQL-Anfrage unmittelbar komplexere Datensätze als Resultset an das Client-Computersystem übermitteln zu können. US Patent US 7,051,038 B1 beschreibt ein elektronisches Berichtssystem, welches Netzdienste nutzt um objektorientierte Berichte zu erstellen. Durch die Nutzung von Objekten, wie sie beispielsweise in Datenbanken der Firma Oracle ermöglicht ist, bilden Objekttypen und ihre konkreten Ausprägungen, die Objekte, eine Abstraktionsschicht über den Tabellen in denen die Daten gespeichert sind. Um die Vorteile der objektorientierten Datenspeicherung nutzen zu können, ist es allerdings erforderlich, die bisher in der Regel in sogenannten relationalen Tabellen abgelegten Daten objektorientiert umzusortieren und in der Datenbank in speziellen Tabellentypen zu speichern. Dieser Aufwand kann bei großen Datenbanken extrem hoch sein und birgt immer die Gefahr, dass bei der Konvertierung Fehler auftreten, die unerkannt bleiben. Für sicherheitsrelevante Daten ist ein Datenverlust jedoch unvertretbar, in vielen anderen Fällen ist es schlicht nicht wirtschaftlich die Konvertierung der Tabellendaten vorzunehmen. Zudem sind viele Anwendungen und Reportingsysteme auch schlicht nicht in der Lage, mit derartigen objektrationalen Daten umzugehen. Die Nutzung von Objekten in Datenbanken hat sich daher nicht durchsetzen können.

Die Aufgabe der vorliegenden Erfindung besteht darin, ein Verfahren zu schaffen, das es einem Client-Computersystem erlaubt, durch eine SQL-Abfrage ein komplexes Ergebnisdokument außerhalb des Client-Computersystems zu generieren und gleichzeitig die Belastung des Telekommunikationsnetzwerks, welches das Client-Computersystem mit einem eine Datenbank enthaltendes zweites Computersystem verbindet, zu verringern.

Erfindungsgemäß wird die Aufgabe durch ein Verfahren gelöst, das die folgenden Verfahrensschritte aufweist:
A) Vom Client-Computersystem wird eine SQL-Anfrage formuliert und über das Telekommunikationsnetzwerk an einen SQL Parser der Datenbank übermittelt, wobei die SQL-Anfrage Inhalt und Form eines zu generierenden Ergebnisdokuments definiert.
B) In der Datenbank wird durch den SQL-Parser auf die SQL-Anfrage hin ein Datenmanager aktiviert.
C) Der Datenmanager generiert entsprechend der SQL-Anfrage aus zugeordneten, in der Datenbank in einer oder mehreren Konfigurationstabellen gespeicherten Datensätzen eine Anzahl von Objektinstanzen eines Datenmodul-Objekttyps, wobei den einzelnen Objektinstanzen jeweils individuelle SQL-Abfragen zugeordnet werden.
D) Die einzelnen Objektinstanzen richten ihre SQL-Abfragen sukzessive an den SQL-Parser und ermitteln die für sich relevanten Ergebnisdaten aus den relationalen Tabellen.
E) Die Ergebnisdaten werden von der jeweiligen Objektinstanz gepuffert.
F) Nach dem Erfassen der Ergebnisdaten aller Objektinstanzen lädt ein Renderer eine in der Datenbank gespeicherte, dem Datenmodul-Objekttyp zugeordnete Dokumentenvorlage.
G) Der Renderer greift wahlfrei auf die relevanten, gepufferten Ergebnisdaten zu und lädt sie in die Dokumentenvorlage, wodurch das Ergebnisdokument erzeugt wird.
H) Das Ergebnisdokument wird in der Datenbank gespeichert und/oder über das Telekommunikationsnetzwerk an das Client-Computersystem versandt

Der Vorteil des erfindungsgemäßen Verfahrens besteht darin, dass das Client-Computersystem eine einzelne SQL-Anfrage, welche nicht die einzelnen Datenselektionen beschreibt, sondern Inhalt und Form des zu generierenden Dokuments definiert, formulieren und über das Telekommunikationsnetzwerk an einen SQL-Parser der Datenbank übermitteln kann. Die Datenbank erkennt, dass es sich hierbei um eine Anfrage nach einem Datensatz aus einer Konfigurationstabelle handelt, der allerdings selbst nicht an das Client-Computersystem übermittelt wird, sondern dazu genutzt wird, in der Datenbank selbst die Objektinstanzen eines Datenmodul-Objekttyps zu generieren und die beschriebenen Einzelabfragen an die relationalen Tabellen zu richten. Hierzu kann nach Ausführungsformen ein Flag in der SQL-Anfrage vorgesehen sein, anhand dessen Zustand der SQL-Parser erkennt, ob die SQL-Anfrage in Form einer relationalen Datenabfrage, oder in Form einer objektorientierten Datenabfrage verarbeitet werden soll. Ferner ist es auch möglich, dass der SQL-Parser aus dem Kontext bzw. der Syntax der SQL-Abfrage selbstständig erkennt, ob die SQL-Anfrage in Form einer relationalen Datenabfrage, oder in Form einer objektorientierten Datenabfrage verarbeitet werden soll. Beispielsweise könnte ein Grenzwert für die Zahl der im Zuge der SQL-Anfrage abgefragten Datenelemente definiert werden, oberhalb dessen die Verarbeitung der SQL-Anfrage in einer objektorientierten Form erfolgen soll.

Durch das erfindungsgemäße Verfahren können die Mehrfach-Abfragen zwischen Client Computersystem und dem die Datenbank enthaltenden zweiten Computersystem entfallen und das Telekommunikationsnetzwerk wird substantiell entlastet. Eine Entlastung des Telekommunikationsnetzwerks findet insbesondere auch dann statt, wenn das Datenvolumen des aus den gepufferten Ergebnisdaten erzeugten Ergebnisdokuments kleiner ist, als das Datenvolumen der gepufferten Ergebnisdaten selbst. Ferner besteht die Möglichkeit, das Ergebnisdokument in der Datenbank für eine spätere Übermittlung über das Telekommunikationsnetzwerk zwischenzeitlich zu speichern oder unmittelbar über das Netzwerk an das Client-Computersystem zu versenden, so dass dieser nach einer einfachen Suchanfrage unmittelbar ein fertiges Dokument erhält und keinerlei zusätzliche Routinen innerhalb des Client ablaufen müssen.

Dabei kann im Falle einer Zwischenspeicherung von Ergebnisdokumenten vorgesehen sein, dass die Ergebnisdokumente zu einem späteren Zeitpunkt an dritte Computersysteme übermittelt werden, oder durch dritte Computersysteme von der Datenbank abgerufen werden können. Hierzu können beispielsweise durch das Client-Computersystem im Zuge der SQL-Anfrage diejenigen dritten Computersysteme festgelegt werden, welche für einen Zugriff auf durch Abarbeitung der SQL-Anfrage erzeugte Ergebnisdokumente erhalten, bzw. an welche das bzw. die Ergebnisdokumente übermittelt werden sollen.

Das Übermitteln eines fertigen Dokuments an das Client-Computersystem kann insbesondere dann vorteilhaft sein, wenn es sich bei dem Client-Computersystem um ein mobiles, batteriebetriebenes Endgerät mit eingeschränkter Rechenleistung, wie beispielsweise ein Tablet-PC oder Smartphone handelt. In diesem Fall kann die zumeist ressourcenintensive Verarbeitung der empfangenen Ergebnisdaten innerhalb des mobilen Endgerätes entfallen, sodass einerseits das gerenderte Ergebnisdokument einem Endnutzer unmittelbar nach dessen Übermittlung zur Verfügung steht, während gleichzeitig die Batterielaufzeit des Endgeräts verlängert werden kann.

Das erfindungsgemäße Verfahren hat auch den Vorteil, dass es unter Sicherheitsaspekten höhere Kriterien erfüllt, da nur ein relativ geringer Netzwerkverkehr erfolgt, der durch Dritte abgefangen werden könnte. Im Rahmen einer Verschlüsselung können auch vorzugweise die SQL-Anfrage vom Client-Computersystem an die Datenbank und/oder das Ergebnisdokument in der Datenbank verschlüsselt werden, wobei die Verschlüsselung gegebenenfalls vor dem Abspeichern in der Datenbank vorgenommen werden kann oder erst unmittelbar vor der Versendung des Ergebnisdokumentes über das Netzwerk. Eine erhöhte Abhörsicherheit von in einem Telekommunikationsnetzwerk übermittelten Daten ist dabei insbesondere vor dem Hintergrund der Zugreifbarkeit auf Datenbestände im Bereich des Cloud-Computings zunehmend relevant. Ohnehin sind die Vorteile der Erfindung in hohem Maße für das wachsende Segment der über Telekommunikationsnetze kommunizierenden Cloud-Datenbanken von enormen Nutzen, da die Anzahl der Zugriffe und die Menge der Datenübermittlung drastisch reduziert wird.
Zu erwähnen ist hierbei auch wiederum die erheblich höhere Netzwerkbelastung, die auftritt, wenn eine Vielzahl einzelner SQL-Abfragen und Übermittlung von Resultsets, die zu wesentlichen Teilen für die Erstellung eines Dokumentes meist gar nicht benötigt werden, alle hochverschlüsselt über das Netzwerk versandt werden.

Das Verfahren lässt sich problemlos dahingehend erweitern, dass eines oder mehrere in der Datenbank gespeicherte Ergebnisdokumente an eine Mehrzahl von Empfängern über das Netzwerk versandt werden oder zum Abruf oder späteren Versand in der Datenbank bereitgehalten werden. Selbstverständlich ist es hierbei auch möglich, die Ergebnisdokumente unmittelbar an verschiedene Empfänger durch die Datenbank per E-Mail zu versenden oder es besteht die Möglichkeit, die generierten Dokumente gezielt durch verschiedene Empfänger in der Datenbank abzufragen.

Wie bereits erwähnt, besitzen alle Objektinstanzen, die durch eine SQL-Anfrage des Client-Computersystems generiert werden, vorzugsweise die gleiche Grundfunktionalität. Die objektorientierten Datensätze in den Konfigurationstabellen, die zur Erstellung der Objektinstanzen genutzt werden, können vorzugsweise über das Client-Computersystem frei programmiert werden, so dass jederzeit eine Anpassung für die Erzeugung der gewünschten Ergebnisdokumente ermöglicht ist. Aus Sicherheitsgründen ist es dabei bevorzugt, dass das Client-Computersystem zum Programmieren objektorientierter Datensätze in der Datenbank eine besondere Berechtigung nachweisen muss.

Um einen Dokumentensatz aus mehreren Ergebnisdokumenten erzeugen zu können, beispielsweise zur Erstellung eines Rundschreibens an Kunden, für die bestimmte Kriterien zutreffend sind, kann das Verfahren vorzugsweise dahingehend erweitert werden, dass die Schritte C-H in einer Iterationsschleife wiederholt werden, bis der vollständige Dokumentensatz vorliegt. Die entsprechenden Dokumente, bei denen es sich beispielsweise um Textdokumente handeln kann, können unmittelbar ausgedruckt und Post oder unmittelbar per E-Mail an die Kunden direkt gesandt werden, wobei die entsprechenden Kommunikationsdaten in der gespeicherten Tabelle vorliegen.

Eine weitere Variante des Verfahrens kann vorsehen, dass zur Erzeugung eines aus mehreren Ergebnisdokumenten bestehenden Dokumentensatzes, der auf den gleichen Ergebnisdaten von Objektinstanzen beruht, die Schritte F bis H in einer Iterationsschleife wiederholt werden, bis der vollständige Dokumentensatz vorliegt.

Eine solche Ausgestaltung des Verfahrens kann gewählt werden, wenn aus den Ergebnisdaten der Objektinstanzen unterschiedliche Dokumente generiert werden sollen, beispielsweise Textdokumente für ein Anschreiben, dem dann Tabellendokumente oder Präsentationsdokumente als Anhang beigefügt werden. Eine Kombination mit dem zuvor beschriebenen Verfahren und seiner Iterationsschleife ist selbstverständlich ebenfalls möglich.

Nachfolgend wird anhand der beigefügten Zeichnungen näher auf ein Ausführungsbeispiel der Erfindung in Gegenüberstellung zu den bislang üblichen Verfahren vorgestellt. Es zeigen:
- Fig. 1: ein Ablaufdiagramm einer herkömmlichen Datenbankabfrage;
- Fig. 2: ein Ablaufdiagramm bei einem zwischengeschalteten Reporting-System;
- Fig. 3: ein schematisches Schaubild einer objektorientierten Datenbank;
- Fig. 4: ein Ablaufdiagramm gemäß der vorliegenden Erfindung.

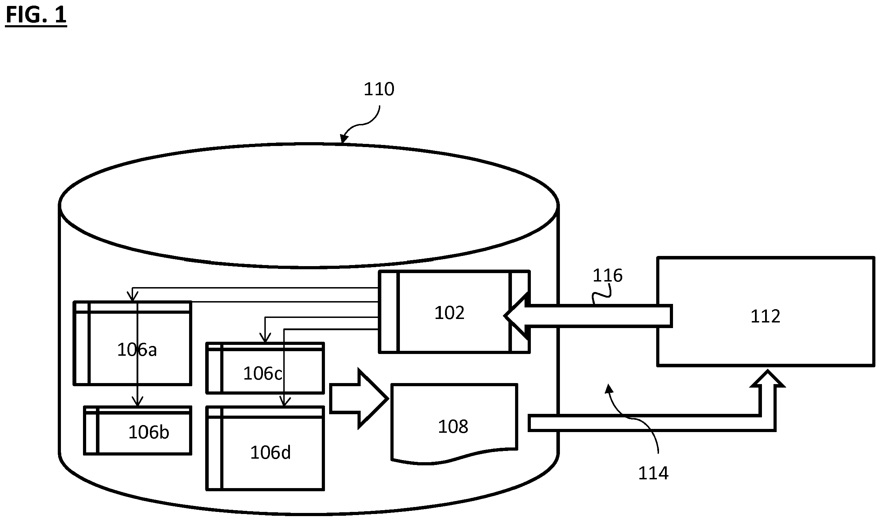

Fig. 1 bis 3 veranschaulichen Verfahren für Datenbankabfragen wie Sie aus dem Stand der Technik bekannt sind.

Fig. 1 zeigt schematisch eine Datenbank 110 und ein Client-Computersystem 112, die über ein Telekommunikationsnetzwerk 114 miteinander kommunizieren. Das Client 112 formuliert eine Abfrage 116 in SQL-Syntax und sendet diese über das Netzwerk 114 an ein die Datenbank 110 enthaltendes Computersystem. Ein SQL-Parser 102 identifiziert die beteiligten Tabellen 106a, 106b, 106c, 106d und legt den optimalen Zugriff fest. Die auf die Abfrage zutreffenden Datensätze und die selektierten Spalten werden in einem Resultset 108 vorgehalten, wobei das Client-Computersystem 112 wiederum über das Telekommunikationsnetzwerk 114 über die Bereitstellung des Resultsets 108 informiert wird und die Daten aus der Datenbank 110 beziehen kann. Bei der nächsten SQL-Abfrage 116 beginnt der Prozess von vorne, wobei die Ergebnisse der ersten Abfrage in der Datenbank nicht mehr vorhanden sind.

Innerhalb des Client-Computersystems 112 muss schließlich bei dieser Lösung aus den über das Telekommunikationsnetzwerk erhaltenen Daten noch das gewünschte Dokument, bei welchem es sich beispielsweise um ein Textdokument, ein Tabellendokument, ein Präsentationsdokument oder ein sonstiges Dokument handeln kann, generiert werden, indem die Daten in eine Dokumentenvorlage eingetragen werden. Auf die Nachteile eines solchen Verfahrens ist in der Beschreibungseinleitung bereits hingewiesen worden.

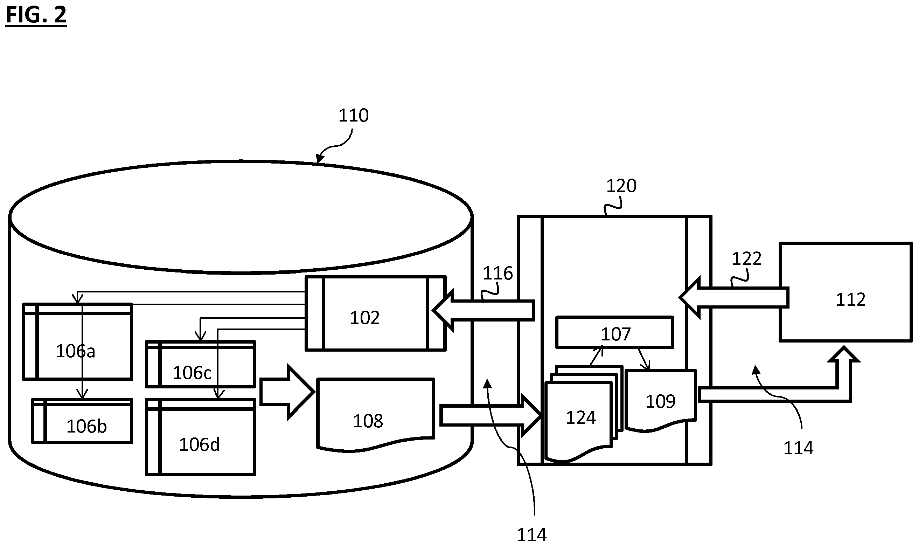

Fig. 2 beschreibt die ebenfalls bereits in der Beschreibungseinleitung vorgestellte Lösung, bei welcher das Client-Computersystem 112 und die Datenbank 110 über ein zwischengeschaltetes Reporting- oder BI-System 120 miteinander kommunizieren. Die Datenbank 110 entspricht der in Fig. 1 gezeigten und beschriebenen Datenbank, die Bezugszeichen sind entsprechend unverändert. In diesem Fall formuliert das Client-Computersystem 112 eine Reportanfrage 122 an das Reportingsystem 120, das diese dann in die einzelnen SQL-Abfragen 116 aufgliedert. Diese werden über das Telekommunikationsnetzwerk 114 in der bereits beschriebenen Art und Weise an die Datenbank 110 übermittelt, während das Reporting-System 120 die Resultsets 108 von der Datenbank 110 bezieht. Das Reporting-System 120 verfügt über einen Datenpuffer 124 sowie einen Renderer 107, der aus den gepufferten Resultsets ein Dokument 109 generiert, das schließlich an das Client-Computersystem 112 übermittelt wird.

Der bei diesem System anfallende Datenverkehr im Netzwerk ist bereits zwischen dem Reportingsystem 120 und der Datenbank 110 im gleichen Umfang gegeben wie bei der Standardabfrage, wie sie in Fig. 1 veranschaulicht ist. Zusätzlich kommt Datenverkehr zwischen dem Client 112 und dem Reportingsystem 120 hinzu, wobei auch die zusätzliche Hardware-Infrastruktur das System langsamer und anfälliger macht. Entsprechend sind der Wartungsaufwand und die Kosten höher.

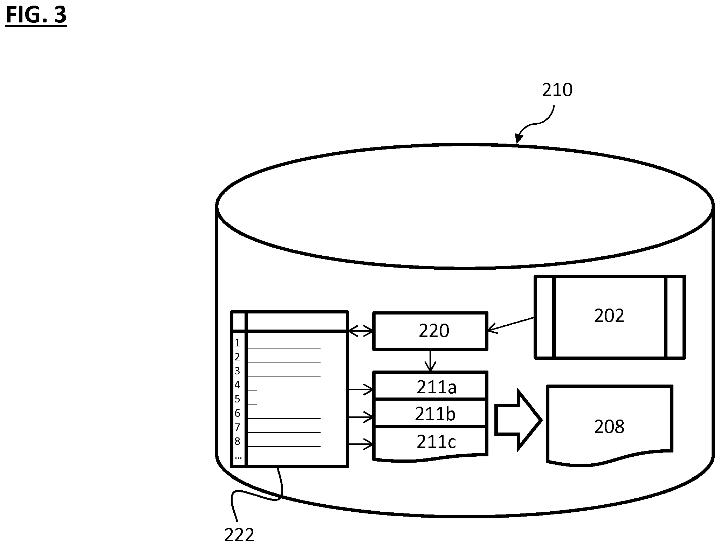

Fig. 3 zeigt schematisch eine Datenbank, die objektorientiert ausgebildet ist. Eine solche Architektur ist beispielsweise bei Datenbanken der Firma Oracle möglich. Eine derartige Datenbank 210 speichert die vorhandenen Daten jeweils in einem einem Objekttyp 220 zugeordneten Tabellentyp 222, so dass durch eine SQL-Anfrage an den SQL-Parser 202 mittels des vorbestimmten Objekttyps Objekte 211 a, b, c generiert werden können, die eine Abstraktionsschicht über den Tabellen bilden, in denen die eigentlichen Daten gespeichert sind. Der Vorteil dieser Lösung besteht darin, dass in dem erzeugten Resultset 208 objektorientierte Daten vorliegen, so dass die Anzahl der Mehrfachanfragen reduziert werden kann. Das Resultset 208, das an den Client über das Netzwerk übermittelt wird, dient diesem zur Generierung des gewünschten Dokuments, wobei allerdings eine beträchtliche Anzahl der übermittelten Daten für die Generierung eines Dokumentes meist gar nicht erforderlich ist. Ein viel größerer Nachteil bei diesem System besteht jedoch darin, dass die in der Regel als relationale Tabellen in herkömmlichen Datenbanken 110 gespeicherten Daten für eine objektorientierte Nutzung konvertiert und neu sortiert werden müssen. Damit geht ein beträchtlicher Aufwand einher mit dem Risiko, dass es bei der Neusortierung zu Datenfehlern oder -verlusten kommt.

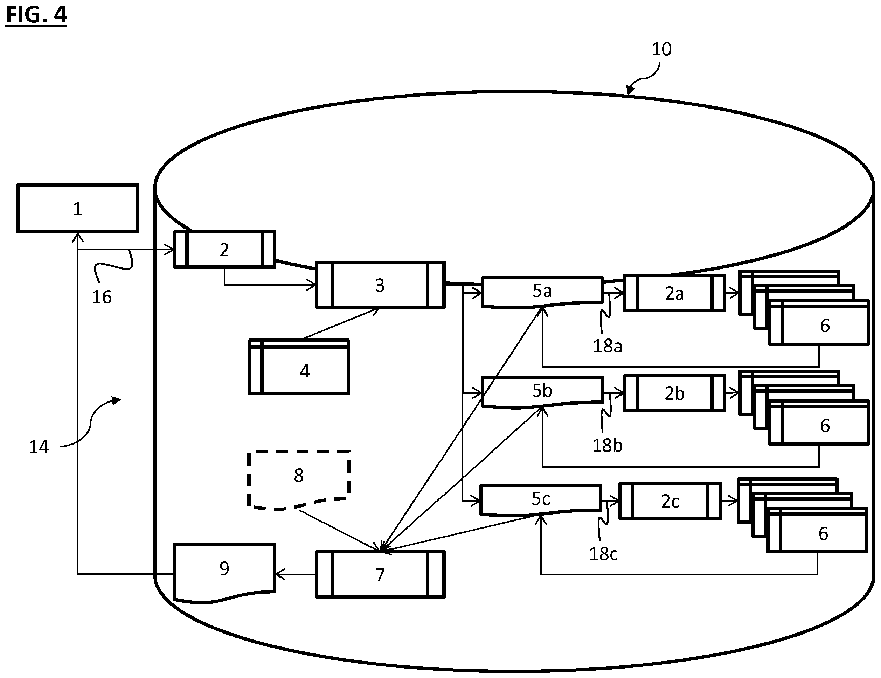

In Fig. 4 wird schließlich das erfindungsgemäße Verfahren vorgestellt. Dort ist eine Datenbank 10 gezeigt, in welcher die Daten in herkömmlicher Weise in relationalen Tabellen 6 gespeichert sind, d. h. diese Daten können unmittelbar in der üblichen Sortierung eingesetzt werden. Gleichzeitig verfügt die Datenbank 10 über die Möglichkeit, objektorientiert Daten zu verarbeiten, worauf später noch naher eingegangen wird. Ein Client-Computersystem 1 kommuniziert wiederum über ein Telekommunikationsnetzwerk 14 mit der Datenbank 10.

Wird seitens des Client-Computersystems 1 eine SQL-Anfrage 16, die das Generieren eines oder mehrerer Dokumente 9 zum Ziel hat gesendet, erkennt der SQL-Parser 2 anhand eines Flags in der SQL-Anfrage 16, oder anhand der Syntax der SQL-Anfrage 16, dass keine Datenabfrage im Sinne des in Fig. 1 beschriebenen Verfahrens vorliegt, sondern dass eine komplexe Anfrage nach einem Dokument gestartet worden ist, die von einem Datenmanager 3 zu bearbeiten ist. Der aktivierte Datenmanager 3 liest dann eine Konfigurationstabelle 4 aus und generiert, je nach Konfiguration, 1 bis n Objektinstanzen 5a, 5b, 5c eines generischen Datenmodul-Objekttyps, die alle über die gleiche Grundfunktionalität verfügen, sich darüber hinaus aber je nach individueller Konfiguration unterschiedlich verhalten. Entsprechend ist bei dem gezeigten Ausführungsbeispiel n=3.

Die Besonderheit der Objekttypinstanzen 5a, 5b, 5c besteht darin, dass diese jeweils eine eigene individuelle SQL-Abfrage 18a, 18b, 18c erhalten, wobei die Objektinstanzen 5a, 5b, 5c vom Datenmanager 3 sukzessive aufgefordert werden, ihre Daten zu laden. Hierzu führt die jeweilige Objektinstanz 5a, 5b, 5c ihre SQL-Abfrage wiederum gegen den SQL-Parser (hier 2a, 2b, 2c) aus und ermittelt aus den relationalen Tabellen 6 die relevanten Daten. Diese Ergebnisdaten werden in der jeweiligen Objektinstanz 5a, 5b, 5c selbst gepuffert.

Die weitere Bearbeitung nach der Beladung aller Objektinstanzen 1 bis n, hier 5a, 5b, 5c übernimmt ein Renderer 7, der zunächst eine in der Datenbank 10 selbst abgespeicherte Dokumentenvorlage 8 lädt und ermittelt, welche Daten wo und in welcher Form im Ergebnisdokument ausgegeben werden sollen. In der Folge greift er dazu wahlfrei auf die in den Objektinstanzen 5a, 5b, 5c gepufferten Resultsets zu und erzeugt daraus in Verbindung mit der Dokumentenvorlage 8 das resultierende Ergebnisdokument 9. Dieses Dokument kann entweder in der Datenbank 10 selbst auf Abruf gespeichert werden oder unmittelbar über das Netzwerk 14 an das Client-Computersystem 1 zurückgegeben werden. Sofern ein Dokumentensatz erzeugt werden soll, ist es auch möglich, datenbankintern eine Iterationsschleife durchzuführen, wobei der Datenmanager 3 beispielsweise unter Zuhilfenahme anderer Objektdaten aus der Konfigurationstabelle 4 andere Objektinstanzen und weitere Dokumente generiert. Es ist auch möglich, eine Iterationsschleife datenbankintern dahingehend auszuführen, dass der Renderer nach dem Generieren eines Dokumentes aus einer bestimmten Dokumentenvorlage 8 weitere Dokumentenvorlagen zieht und diese aus in den Objektinstanzen bereits gepufferten Resultsets mit Daten belädt. Das wiederholte ressourcenintensive Laden der Daten kann somit entfallen.

Das beschriebene Verfahren eignet sich auch dazu, dass von der Datenbank 10 die generierten Dokumente unmittelbar an eine Vielzahl weiterer Empfänger beispielsweise auch als Mail verschickt oder auf FTP-Freigaben abgelegt werden. Hierzu ist es ohne weiteres möglich, die Dokumente 9 bereits datenbankintern zu verschlüsseln, ebenso wie es möglich ist, dass der SQL-Parser 2 eine durch den Client 1 verschlüsselt gesendete SQL-Anfrage für die weitere Bearbeitung entschlüsselt.

Durch den beschriebenen Ablauf wird die Belastung des Telekommunikationsnetzwerks 14 auf ein Minimum reduziert und es werden nur Dokumentenrelevante Daten über das Telekommunikationsnetzwerk 14 verschickt, da die für die Generierung eines Dokuments 9 nicht benötigten, gleichwohl aber in den Resultsets vorliegenden Daten erst gar nicht über das Telekommunikationsnetzwerk 14 übermittelt werden. Dies bedeutet auch einen zusätzlichen Gewinn an Sicherheit bei der Datenübertragung.

Die relationale Struktur der Tabellen 6 kann beibehalten werden, wobei in der Datenbank 10 lediglich die objektorientiert angelegte Konfigurationstabelle 4 hinterlegt und die gewünschten Dokumentenmuster 8 gespeichert werden müssen. Die Konfigurationstabelle 4 kann gegebenenfalls nach Nachweis einer entsprechenden Berechtigung durch den Client 12 geändert werden, um eine flexible Anpassung an die Wünsche des Clients oder der Empfänger zu ermöglichen.

## Patentansprüche

1. Telekommunikationsverfahren zur Erzeugung und Übermittlung von Ergebnisdokumenten (9) zwischen einem Client-Computersystem (1) und einem zweiten Computersystem, wobei das Client-Computersystem und das zweite Computersystem über ein Telekommunikationsnetzwerk verbunden sind, wobei das zweite Computersystem zumindest eine Datenbank (10) mit in relationalen Tabellen (6) gespeicherten Daten aufweist, **gekennzeichnet durch** die folgenden Verfahrensschritte:
A) Vom Client-Computersystem (1) wird eine SQL-Anfrage (16) formuliert und über das Telekommunikationsnetzwerk (14) an einen SQL Parser (2) der Datenbank (10) übermittelt, wobei die SQL-Anfrage Inhalt und Form eines zu generierenden Ergebnisdokuments (9) definiert.
B) In der Datenbank (10) wird durch den SQL-Parser (2) auf die SQL-Anfrage (16) hin ein Datenmanager (3) aktiviert.
C) Der Datenmanager (3) generiert entsprechend der SQL-Anfrage (16) aus zugeordneten, in der Datenbank (10) in einer oder mehreren Konfigurationstabellen (4) gespeicherten, Datensätzen eine Anzahl von Objektinstanzen (5a, 5b, 5c) eines Datenmodul-Objekttyps, wobei den einzelnen Objektinstanzen (5a, 5b, 5c) jeweils individuelle SQL-Abfragen (18a, 18b, 18c) zugeordnet werden.
D) Die einzelnen Objektinstanzen (5a, 5b, 5c) richten ihre SQL-Abfragen (18a, 18b, 18c) sukzessive an den SQL-Parser (2a, 2b, 2c) und ermitteln die für sich relevanten Ergebnisdaten aus den relationalen Tabellen (6).
E) Die Ergebnisdaten werden von der jeweiligen Objektinstanz (5a, 5b, 5c) gepuffert.
F) Nach dem Erfassen der Ergebnisdaten aller Objektinstanzen (5a, 5b, 5c) lädt ein Renderer (7) eine in der Datenbank (10) gespeicherte, dem Datenmodul-Objekttyp zugeordnete Dokumentenvorlage (8).
G) Der Renderer (7) greift wahlfrei auf die relevanten, gepufferten Ergebnisdaten zu und lädt sie in die Dokumentenvorlage (8), wodurch das Ergebnisdokument (9) erzeugt wird.
H) Das Ergebnisdokument (9) wird in der Datenbank (10) gespeichert und/oder über das Telekommunikationsnetzwerk (14) an das Client-Computersystem (1) versandt.

2. Telekommunikationsverfahren nach Anspruch 1, **dadurch gekennzeichnet, dass** die SQL-Anfrage (16) vom Client-Computersystem (1) verschlüsselt und in der Datenbank (10) nach der Übertragung durch das Netzwerk (14) entschlüsselt wird.

3. Telekommunikationsverfahren nach Anspruch 1 oder 2, **dadurch gekennzeichnet, dass** Ergebnisdokumente (9) in der Datenbank (10) verschlüsselt werden, bevor sie über das Telekommunikationsnetzwerk (14) versandt werden.

4. Telekommunikationsverfahren nach einem der Ansprüche 1 bis 3, **dadurch gekennzeichnet, dass** eines oder mehrere in der Datenbank (10) gespeicherte Ergebnisdokumente (9) an eine Mehrzahl von Empfängern über das Telekommunikationsnetzwerk (14) versandt werden.

5. Telekommunikationsverfahren nach einem der vorhergehenden Ansprüche, **dadurch gekennzeichnet, dass** alle Objektinstanzen (5a, 5b, 5c), die durch eine SQL-Anfrage (16) des Client-Computersystems (1) generiert werden, über die gleiche Grundfunktionalität verfügen.

6. Telekommunikationsverfahren nach Anspruch 1, **dadurch gekennzeichnet, dass** die objektorientierten Datensätze in den Konfigurationstabellen (4) über das Client-Computersystem (1) programmierbar sind.

7. Telekommunikationsverfahren nach Anspruch 6, **dadurch gekennzeichnet, dass** das Client-Computersystem (1) zum Programmieren objektorientierter Datensätze eine besondere Berechtigung benötigt.

8. Telekommunikationsverfahren nach einem der vorhergehenden Ansprüche, **dadurch gekennzeichnet, dass** zur Erzeugung eines aus mehreren Ergebnisdokumenten (9) mit unterschiedlichen Dateninhalten bestehenden Dokumentensatzes die Schritte C bis H in einer Iterationsschleife wiederholt werden, bis der vollständige Dokumentensatz vorliegt.

9. Telekommunikationsverfahren nach einem der vorhergehenden Ansprüche, **dadurch gekennzeichnet, dass** zur Erzeugung eines aus mehreren Ergebnisdokumenten (9) bestehenden Dokumentensatzes, der auf den gleichen Ergebnisdaten von Objektinstanzen beruht, die Schritte F bis H in einer Iterationsschleife mit unterschiedlichen Dokumenten vorlegen (8) wiederholt werden, bis der vollständige Dokumentensatz vorliegt.

10. Telekommunikationsverfahren nach einem der vorhergehenden Ansprüche, **dadurch gekennzeichnet, dass** es sich bei dem Client-Computersystem (1) um ein mobiles, batteriebetriebenes Endgerät handelt.

11. Telekommunikationsverfahren nach einem der vorhergehenden Ansprüche, **dadurch gekennzeichnet, dass** der SQL-Parser (2) dazu ausgebildet ist, nach Empfang der SQL-Anfrage (16) zu entscheiden, ob die SQL-Anfrage (16) in Form einer relationalen Datenabfrage oder in Form einer objektorientierten Datenabfrage durch Abarbeitung der Verfahrensschritte C)-H) verarbeitet werden soll.

12. Telekommunikationsverfahren nach Anspruch 11, **dadurch gekennzeichnet, dass** die SQL-Anfrage (16) einen Flag enthält, wobei der SQL-Parser (2) dazu ausgebildet ist, den Zustand des Flags nach Empfang der SQL-Anfrage (16) zu lesen, wobei der SQL-Parser (2) ferner dazu ausgebildet ist, in Abhängigkeit des ausgelesenen Zustands des Flags zu entscheiden, ob die SQL-Anfrage (16) in Form einer relationalen Datenabfrage oder in Form einer objektorientierten Datenabfrage verarbeitet werden soll.

13. Telekommunikationsverfahren nach Anspruch 11, **dadurch gekennzeichnet, dass** der SQL-Parser (2) dazu ausgebildet ist, anhand der Syntax der SQL-Anfrage (16) zu entscheiden, ob die SQL-Anfrage (16) in Form einer relationalen Datenabfrage oder in Form einer objektorientierten Datenabfrage verarbeitet werden soll.

14. Telekommunikationsverfahren nach einem der vorhergehenden Ansprüche, **dadurch gekennzeichnet, dass** das Datenvolumen des Ergebnisdokuments (9) kleiner als das Datenvolumen der gepufferten Ergebnisdaten ist.

15. Telekommunikationsverfahren nach einem der vorhergehenden Ansprüche, **dadurch gekennzeichnet, dass** in der Datenbank (10) gespeicherte Ergebnisdokumente (9) zu einem späteren Zeitpunkt durch die Datenbank (10) an dritte Computersysteme über das Telekommunikationsnetzwerk (14) versendet werden, oder durch dritte Computersystem von der Datenbank (10) über das Telekommunikationsnetzwerk (14) abrufbar sind.

## Claims

1. Telecommunications method for generating and transmitting result documents (9) between a client computer system (1) and a second computer system, wherein the client computer system and the second computer system are connected via a telecommunications network, wherein the second computer system has at least one database (10) with data stored in relational tables (6), **characterised by** the following method steps:
A) An SQL request (16) is formulated by the client computer system (1) and transmitted via the telecommunications network (14) to an SQL parser (2) of the database (10), wherein the SQL request defines content and form of a result document (9) to be generated.
B) A data manager (3) is activated in the database (10) by the SQL parser (2) in response to the SQL request (16).
C) The data manager (3) generates a number of object instances (5a, 5b, 5c) of a data module object type corresponding to data sets assigned to the SQL request (16) and stored in the database (10) in one or a plurality of configuration tables (4), wherein individual SQL requests (18a, 18b, 18c) are assigned to the individual object instances (5a, 5b, 5c).
D) The individual object instances (5a, 5b, 5c) address their SQL requests (18a, 18b, 18c) successively to the SQL parser (2a, 2b, 2c) and determine the final data relevant to them from the relational tables (6).
E) The result data are buffered by the respective object instance (5a, 5b, 5c).
F) After recording the result data of all object instances (5a, 5b, 5c), a renderer (7) loads a document template (8) stored in the database (10) and assigned to the data module object type.
G) The renderer (7) optionally accesses the relevant, buffered result data and loads them in the document template (8), whereby the result document (9) is generated.
H) The result document (9) is stored in the database (10) and/or sent via the telecommunications network (14) to the client computer system (1).

2. Telecommunications method according to claim 1, **characterised in that** the SQL request (16) is encrypted by the client computer system (1) and decrypted in the database (10) after the transmission through the network (14).

3. Telecommunications method according to claim 1 or 2, **characterised in that** result documents (9) are encrypted in the database (10) before they are sent via the telecommunications network (14).

4. Telecommunications method according to any one of claims 1 to 3, **characterised in that** one or a plurality of result documents (9) stored in the database (10) are sent to a plurality of recipients via the telecommunications network (14).

5. Telecommunications method according to any one of the preceding claims, **characterised in that** all object instances (5a, 5b, 5c), which are generated by an SQL request (16) of the client computer system (1), have the same base functionality.

6. Telecommunications method according to claim 1, **characterised in that** the object-oriented data sets in the configurations tables (4) are programmable via the client computer system (1).

7. Telecommunications method according to claim 6, **characterised in that** the client computer system (1) requires a particular authorisation to program object-oriented data sets.

8. Telecommunications method according to any one of the preceding claims, **characterised in that** in order to generate a document set consisting of a plurality of result documents (9) with different data contents, the steps C to H are repeated in an iteration loop until the complete document set is present.

9. Telecommunications method according to any one of the preceding claims, **characterised in that** in order to generate a document set consisting of a plurality of result documents (9), which is based on the same result data of object instances, the steps F to H are repeated in an iteration loop with different document templates (8) until the complete document set is present.

10. Telecommunications method according to any one of the preceding claims, **characterised in that** the client computer system (1) is a mobile, battery-operated end device.

11. Telecommunications method according to any one of the preceding claims, **characterised in that** the SQL parser (2) is designed to decide, after receiving the SQL request (16), whether the SQL request (16) should be processed in the form of a relational data query or in the form of an object-oriented data query by executing the method steps C) to H).

12. Telecommunications method according to claim 11, **characterised in that** the SQL request (16) contains a flag, wherein the SQL parser (2) is designed to read the status of the flag after receiving the SQL request (16), wherein the SQL parser (2) is also designed to decide, as a function of the read status of the flag, whether the SQL request (16) should be processed in the form of a relational data query or in the form of an object-oriented data query.

13. Telecommunications method according to claim 11, **characterised in that** the SQL parser (2) is designed to decide, based on the syntax of the SQL request (16), whether the SQL request (16) should be processed in the form of a relational data query or in the form of an object-oriented data query.

14. Telecommunications method according to any one of the preceding claims, **characterised in that** the data volume of the result document (9) is smaller than the data volume of the buffered result data.

15. Telecommunications method according to any one of the preceding claims, **characterised in that** result documents (9) stored in the database (10) are sent at a later time by the database (10) to third computer systems via the telecommunications network (14) or can be retrieved by third computer systems from the database (10) via the telecommunications network (14).

## Revendications

1. Procédé de télécommunication destiné à la production et à la transmission de documents de résultat (9) entre un système informatique client (1) et un deuxième système informatique, dans lequel le système informatique client et le deuxième système informatique sont reliés par l'intermédiaire d'un réseau de télécommunication, dans lequel le deuxième système informatique comporte au moins une base de données (10) avec des données mémorisées dans des tableaux relationnels (6), **caractérisé par** les étapes de procédé suivantes :
A) Le système informatique client (1) formule une requête SQL (16) et la transmet par l'intermédiaire du réseau de télécommunication (14) à un analyseur SQL (2) de la base de données (10), la requête SQL définissant le contenu et la forme d'un document de résultat (9) à générer.
B) Dans la base de données (10), un gestionnaire de données (3) est activé par l'analyseur SQL (2) en réaction à la requête SQL (16).
C) Le gestionnaire de données (3) génère en fonction de la requête SQL (16) et à partir d'ensembles de données associés mémorisés dans la base de données (10) dans un ou plusieurs tableaux de configuration (4) un certain nombre d'instances d'objets (5a, 5b, 5c) d'un type d'objet de module de données, des interrogations SQL (18a, 18b, 18c) individuelles étant associées à chaque fois aux instances d'objets (5a, 5b, 5c) individuelles.
D) Les instances d'objets (5a, 5b, 5c) individuelles adressent leurs interrogations SQL (18a, 18b, 18c) successivement à l'analyseur SQL (2a, 2b, 2c) et déterminent les données de résultat pertinentes à partir des tableaux relationnels (6).
E) Les données de résultat sont mises en mémoire tampon par l'instance d'objet (5a, 5b, 5c) respective.
F) Après l'acquisition des données de résultat de toutes les instances d'objet (5a, 5b, 5c), un moteur de rendu (7) charge un modèle de document (8) mémorisé dans la base de données (10) et associé au type d'objet de module de données.
G) Le moteur de rendu (7) accède optionnellement aux données de résultat pertinentes mises en mémoire tampon et les charge dans le modèle de document (8), ce qui produit le document de résultat (9).
H) Le document de résultat (9) est mémorisé dans la base de données (10) et/ou envoyé au système informatique client (1) par l'intermédiaire du réseau de télécommunication (14).

2. Procédé de télécommunication selon la revendication 1, **caractérisé en ce que** la requête SQL (16) est cryptée par le système informatique client (1) et décryptée dans la base de données (10) après la transmission par le réseau (14).

3. Procédé de télécommunication selon la revendication 1 ou 2, **caractérisé en ce que** des documents de résultat (9) sont cryptés dans la base de données (10) avant d'être transmis par l'intermédiaire du réseau de télécommunication (14).

4. Procédé de télécommunication selon l'une quelconque des revendications 1 à 3, **caractérisé en ce qu'**un ou plusieurs documents de résultat (9) mémorisés dans la base de données (10) sont envoyés à plusieurs récepteurs par l'intermédiaire du réseau de télécommunication (14).

5. Procédé de télécommunication selon l'une quelconque des revendications précédentes, **caractérisé en ce que** toutes les instances d'objets (5a, 5b, 5c) qui sont générées par une requête SQL (16) du système informatique client (1) disposent de la même fonctionnalité de base.

6. Procédé de télécommunication selon la revendication 1, **caractérisé en ce que** les ensembles de données orientés objet sont programmables dans les tableaux de configuration (4) par l'intermédiaire du système informatique client (1).

7. Procédé de télécommunication selon la revendication 6, **caractérisé en ce que** le système informatique client (1) a besoin d'une autorisation particulière pour la programmation d'ensembles de données orientés objet.

8. Procédé de télécommunication selon l'une quelconque des revendications précédentes, **caractérisé en ce que**, pour la production d'un ensemble de documents constitué de plusieurs documents de résultat (9) avec différents contenus de données, on répète les étapes C à H dans une boucle itérative jusqu'à avoir l'ensemble de documents complet.

9. Procédé de télécommunication selon l'une quelconque des revendications précédentes, **caractérisé en ce que**, pour la production d'un ensemble de documents qui est constitué de plusieurs documents de résultat (9) et qui repose sur les mêmes données de résultat d'instances d'objets, on répète les étapes F à H dans une boucle itérative avec différents modèles de documents (8) jusqu'à avoir l'ensemble de documents complet.

10. Procédé de télécommunication selon l'une quelconque des revendications précédentes, **caractérisé en ce que** le système informatique client (1) est un terminal mobile fonctionnant sur batterie.

11. Procédé de télécommunication selon l'une quelconque des revendications précédentes, **caractérisé en ce que** l'analyseur SQL (2) est conçu de manière à décider si, après la réception de la requête SQL (16), ladite requête SQL (16) doit être traitée sous la forme d'une interrogation de données relationnelle ou sous la forme d'une interrogation de données orientée objet par l'exécution des étapes de procédé C) à H).

12. Procédé de télécommunication selon la revendication 11, **caractérisé en ce que** la requête SQL (16) contient un indicateur, l'analyseur SQL (2) étant conçu pour lire l'état de l'indicateur après la réception de la requête SQL (16), l'analyseur SQL (2) étant en outre conçu pour décider, en fonction de l'état lu de l'indicateur, si la requête SQL (16) doit être traitée sous la forme d'une interrogation de données relationnelle ou sous la forme d'une interrogation de données orientée objet.

13. Procédé de télécommunication selon la revendication 11, **caractérisé en ce que** l'analyseur SQL (2) est conçu pour décider, à l'aide de la syntaxe de la requête SQL (16), si la requête SQL (16) doit être traitée sous la forme d'une interrogation de données relationnelle ou sous la forme d'une interrogation de données orientée objet.

14. Procédé de télécommunication selon l'une quelconque des revendications précédentes, **caractérisé en ce que** le volume de données du document de résultat (9) est plus petit que le volume de données des données de résultat mises en mémoire tampon.

15. Procédé de télécommunication selon l'une quelconque des revendications précédentes, **caractérisé en ce que** des documents de résultat (9) mémorisés dans la base de données (10) sont envoyés à un instant ultérieur par la base de données (10) à des systèmes informatiques tiers par l'intermédiaire du réseau de communication (14) ou peuvent être interrogés dans la base de données (10) par des systèmes informatiques tiers par l'intermédiaire du réseau de communication (14).
